# EUROPÄISCHE PATENTSCHRIFT

(11) **EP 0 733 671 B1**
(45) Veröffentlichungstag und Bekanntmachung des Hinweises auf die Patenterteilung: **13.06.2001**
(21) Anmeldenummer: 96103725.6
(22) Anmeldetag: 09.03.1996
(51) Int. Cl.: C08K 5/526, C08L 33/12

(54) **Gegen Verfärbung bei thermischer Belastung stabilisierte Polymethacrylat-Formmassen**
Polymethacrylate moulding matters stabilised against discolouration at thermal stress
Matières de moulage en polyméthacrylate stabilisées à la décoloration sous charge thermique

(30) Priorität: 18.03.1995 DE 29504693 U
(43) Veröffentlichungstag der Anmeldung: 25.09.1996
(73) Patentinhaber: Röhm GmbH & Co. KG, 64293 Darmstadt (DE)
(72) Erfinder: Wicker, Michael, Dr., D-64342 Seeheim-Jugenheim (DE); Numrich, Uwe, Dr., D-64331 Weiterstadt (DE); Mohr, Ernst, D-64653 Lorsch (DE)

(56) Entgegenhaltungen:
- EP-A- 0 457 147
- EP-A- 0 627 461
- DATABASE WPI Section Ch, Week 8532 Derwent Publications Ltd., London, GB; Class A14, AN 85-194703 XP002004482 & JP-A-60 123 547 (KYOWA GAS CHEM IND) , 2.Juli 1985
- PATENT ABSTRACTS OF JAPAN vol. 016, no. 106 (C-0919), 16.März 1992 & JP-A-03 281648 (NIPPON STEEL CHEM CO LTD;OTHERS: 01), 12.Dezember 1991,
- DATABASE WPI Section Ch, Week 8422 Derwent Publications Ltd., London, GB; Class A14, AN 84-137445 XP002004483 & JP-A-59 071 351 (DENKI KAGAKU KOGYO KK) , 23.April 1984
- Römpp Chemie Lexikon, Seite 4303, 9. Auflage, 1992
- Houben-Weyl (1975), S. 1054
- Taschenbuch der Kunststoff-Additive (1979) S. 7, 8 und 65
- Voigt (1966), S. 135, 136 und 227

## Beschreibung

### Gebiet der Erfindung

Die Erfindung betrifft gegen Verfärbung bei thermischer Belastung stabilisierte Polymethacrylat-Formmassen FM, bestehend aus Copolymerisaten CP, aufgebaut aus den Monomereinheiten Alkylmethacrylat, Vinylaromat, Maleinsäureanhydrid und gegebenenfalls Alkylacrylat, wobei die Polymethacrylat-Formmassen FM, bezogen auf 100 Gew.-Teile Copolymerisat CP, 0,001 bis 2 Gew.-Teile einer organischen Phosphitverbindung OP enthalten, die mindestens einen sterisch gehinderten Phenoxysubstituenten aufweist, der über das Sauerstoffatom kovalent mit dem Phosphoratom verbunden ist.

### Stand der Technik

Der Einsatz von Phosphiten als Antioxidantien, die u.a. die Verfärbung von Kunststoff-Formmassen bei thermischer Belastung verhindern, ist bekannt (vgl. beispielsweise Kirk-Othmer, Encyclopedia of Chemical Technology, 3rd. Ed., Vol. 3, Seite 133, J. Wiley, New York, 1978). Weiterhin wird gemäß Jpn. Kokai Tokkyo Koho JP 60,123,547 eine Verbesserung der Verfärbung von Copolymerisaten aus Methylmethacrylat-, Styrol- und Maleinsäureanhydrid-Monomereinheiten unter Spritzgießbedingungen bei höheren Temperaturen beobachtet, wenn solche Copolymerisate vor der Verarbeitung durch Spritzguß mit wenigstens einem Phosphaphenanthren-Derivat und zusätzlich einem sterisch gehinderten Phenol, einem Thiopropionsäureester oder einem Phosphorsäureester als Stabilisatoren gegen den oxidativen Abbau versetzt worden waren.
Jpn. Kokai Tokkyo Koho JP 60,120,735 beschreibt Copolymerisate aus Methylmethacrylat, Vinylaromat und einpolymerisierten cyclischen Anhydriden, denen zur Erhöhung der thermischen Stabilität und zur Vermeidung der Verfärbung solcher Copolymerisate bei thermischer Beanspruchung in der Schmelze, beispielsweise im Spritzguß, Phosphorsäureester und weitere Stabilisatoren auf Basis sterisch gehinderter Phenole zugegeben werden. In Jpn. Kokai Tokkyo Koho 03,167,245 wird die Stabilisierung von Copolymerisaten aus Methylmethacrylat, N-substituierten Maleinimiden und weiteren copolymerisierbaren Monomeren mit Verbindungen ausgewählt aus der Gruppe der alkylsubstituierten Triarylphosphite, der Dialkylpentaerythroldiphosphite sowie der Phosphaphenanthren-Derivate beansprucht.
Jpn. Kokai Tokkyo Koho JP 63,163,306 umfaßt Copolymerisate aus Methylmethacrylat und C8- bis C20-Alkylmethacrylat als Kernmaterial für optische Lichtleiterfasern, die als Stabilisatoren Phosphite, wie beispielsweise sterisch gehinderte Diarylphentaerytroldiphosphite, oder Thiophosphite zur Vermeidung der Verfärbung der Copolymerisate bei thermischer Belastung enthalten.

### Aufgabe und Lösung

Wie dem Stand der Technik entnommen werden kann, ist die Auswahl von Stabilisatoren zur wirksamen Stabilisierung von Methylmethacrylat-haltigen Copolymerisaten gegen Verfärbung bei thermischer Belastung maßgeblich von der Monomerenzusammensetzung der Methylmethacrylat-haltigen Copolymerisate abhängig und speziell auf diese abgestimmt.

Es bestand weiterhin das Bedürfnis, hochwärmeformbeständige Formmassen, bestehend aus Copolymerisaten aus Alkylmethacrylat, Vinylaromaten und Maleinsäureanhydrid wirksam gegen thermische Verfärbung zu schützen. Bei der Herstellung optisch anspruchsvoller Formteile aus solchen Copolymerisaten sind im Spritzguß besonders bei langen Fließwegen und/oder komplizierten Formteilgeometrien meist hohe Verarbeitungstemperaturen notwendig, die oftmals eine Gelbverfärbung der Copolymerisate bedingen.
Die in Jpn. Kokai Tokkyo Koho JP 60,123,547 beschriebene Stabilisierung von Copolymerisaten aus Methylmethacrylat, Styrol und Maleinsäureanhydrid erfordert die Zugabe von zwei verschiedenen Stabilisatorkomponenten, einem Phosphaphenanthren-Derivat und einem sterisch gehinderten Phenol. Die homogene Einarbeitung von zwei Stabilisatoren in solche Copolymerisate im Compoundierschritt ist technisch sehr aufwendig und bedingt entweder eine Vormischung und Homogenisierung beider Stabilisatorkomponenten oder zwei separate Compoundierschritte.
Daraus resultierte die Aufgabe, einkomponentige Stabilisator-Systeme aufzufinden, mit denen die thermisch bedingte Verfärbung von Copolymerisaten, bestehend aus Alkylmethacrylat, Vinylaromat und Maleinsäureanhydrid, reduziert werden kann.
Überraschenderweise wurde gefunden, daß bei Polymethacrylat-Formmassen FM, bestehend aus Copolymerisaten CP, aufgebaut aus:
(m1) 50 bis 98 Gew.-% Alkylmethacrylat mit 1 bis 6 Kohlenstoffatomen im Esterrest, bevorzugt Methylmethacrylat,
(m2) 1 bis 25 Gew.-% Vinylaromat, bevorzugt Styrol und/ oder α-Methylstyrol,
(m3) 1 bis 25 Gew.-% Maleinsäureanhydrid,
   sowie gegebenenfalls
(m4) 0 bis 5 Gew.-% Alkylacrylat mit 1 bis 6 Kohlenstoffatomen im Esterrest, bevorzugt Methylacrylat und/oder Butylacrylat,
wobei die Summe aus (m1), (m2), (m3) und gegebenenfalls (m4) 100 Gew.-% ausmacht, die Verfärbung bei thermischer Belastung reduziert werden kann, wenn die Formmassen FM, bezogen auf 100 Gew.-Teile Copolymerisat CP, 0,001 bis 2 Gew.-Teile, vorzugsweise 0,01 bis 1 Gew.-Teile, und besonders vorzugsweise 0,02 bis 0,5 Gew.-Teile einer organischen Phosphitverbindung OP enthalten, die mindestens einen sterisch gehinderten Phenoxysubstituenten, der über das Sauerstoffatom mit dem Phosphoratom kovalent verbunden ist, aufweisen.
Vorzugsweise sind solche organischen Phosphitverbindungen OP Verbindungen der Formel I: 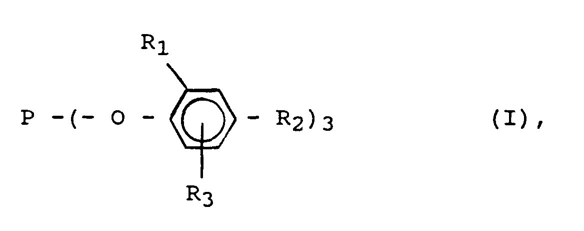
- wobei: R₁ und R₂ unabhängig voneinander für Alkylreste mit 1 bis 6 Kohlenstoffatomen, vorzugsweise für Methyl, Isopropyl und tert.-Butyl, sowie R3 für Wasserstoff oder Alkylreste mit 1 bis 10 Kohlenstoffatomen
stehen können,
oder Verbindungen der Formel II: 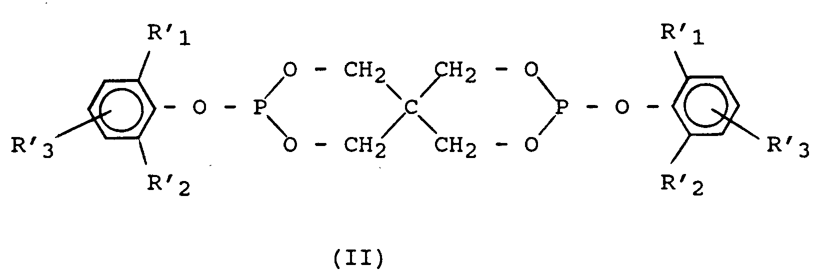 wobei:
- R'₁: für Wasserstoff oder einen Alkylrest mit 1 bis 6 Kohlenstoffatomen, vorzugsweise für Methyl, Isopropyl und tert.-Butyl,
- R'₂: für einen Alkylrest mit 1 bis 6 Kohlenstoffatomen sowie
- R'₃: für Wasserstoff oder Alkyl mit 1 bis 10 Kohlenstoffatomen
stehen können.

### Durchführung der Erfindung

### Die Monomeren (m1), (m2) und (m4)

Die in 50 bis 98 Gew.-%, bezogen auf die gesamten Monomeren, eingesetzten Monomeren (m1) sind ausgewählt aus der Gruppe der Alkylmethacrylate mit 1 bis 6 Kohlenstoffatomen im Esterrest, wie beispielsweise Ethylmethacrylat, Propylmethacrylat, iso-Propylmethacrylat, Butylmethacrylat, iso-Butylmethacrylat, tert.-Butylmethacrylat, Pentylmethacrylat, iso-Pentylmethacrylat, Hexylmethacrylat, 2,2-Dimethylbutylmethacrylat, Cyclopentylmethacrylat, Cyclohexylmethacrylat sowie bevorzugt Methylmethacrylat.
Die Monomeren (m2), die in 1 bis 25 Gew.-%, bezogen auf die gesamten Monomeren, zur Verwendung kommen, sind ausgewählt aus der Gruppe der Vinylaromaten, wie beispielsweise α-Halogenstyrol, p-Methylstyrol, p-tert.-Butylstyrol, Vinylnaphthalin, sowie bevorzugt α-Methylstyrol und ganz besonders bevorzugt Styrol.
Die Monomeren (m4) können in Anteilen von bis zu 5 Gew.-%, bezogen auf die gesamten Monomeren, zur Verbesserung der rheologischen Eigenschaften der Copolymerisate CP eingesetzt werden. Ausgewählt sind die Monomeren (m4) aus der Gruppe der Alkylacrylate mit 1 bis 6 Kohlenstoffatomen im Esterrest wie beispielsweise Ethylacrylat, Propylacrylat, Isopropylacrylat, iso-Butylacrylat, tert.-Butylacrylat, Pentylacrylat, Hexylacrylat, Cyclohexylacrylat, sowie bevorzugt Butylacrylat und besonders bevorzugt Methylacrylat.

### Die Copolymerisate CP

Die Herstellung der Copolymerisate CP erfolgt nach den bekannten Verfahren zur Polymerisation α,β-ungesättigter Verbindungen, insbesondere durch radikalische Polymerisation. Die Polymerisation wird in an sich bekannter Weise durch radikalbildende Polymerisationsinitiatoren PI ausgelöst, läßt sich aber mit geringerer Polymerisationsgeschwindigkeit auch rein thermisch durchführen. In der Regel genügt eine einmalige Zugabe des Polymerisationsinitiators PI vor Beginn der Polymerisation, wobei PI so gewählt wird, daß bei den Polymerisationsbedingungen bis zum Abschluß der Polymerisation eine ausreichende Radikalbildung erfolgt. Beispielhaft für Polymerisationsinitiatoren PI seien genannt: Azoverbindungen, wie 2,2'-Azobis-(isobutyronitril) oder 2,2'-Azobis-(2,4-dimethylvaleronitril), Redox-Systeme, wie die Kombination von tertiären Aminen mit Peroxiden, oder bevorzugt Peroxide (zu Polymerisationsinitiatoren PI vgl. auch H. Rauch-Puntigam, Th. Völker, "Acryl- und Methacrylverbindungen", Springer-Verlag, Heidelberg, 1967, oder Kirk-Othmer, Encyclopedia of Chemical Technology, 3rd. Ed., Vol. 1, Seiten 386 ff, J. Wiley, New York, 1978). Beispiele geeigneter Peroxid-Polymerisationsinitiatoren sind Dilauroylperoxid, tert.-Butylperoctoat, tert.-Butylperisononanoat, Dicyclohexylperoxidicarbonat oder Dibenzoylperoxid. Man kann die Polymerisation auch mit einem Gemisch verschiedener Polymerisationsinitiatoren PI unterschiedlicher Halbwertszeit durchführen, beispielsweise Dilauroylperoxid und tert.-Butylperisononanoat, um den Radikalstrom im Verlauf der Polymerisation sowie bei verschiedenen Polymerisationstemperaturen konstant zu halten. Die eingesetzten Mengen an PI liegen im allgemeinen zwischen 0,01 und 2 Gew.-% bezogen auf die eingesetzten Monomeren.

Die Einstellung der Molekulargewichte der Copolymerisate CP erfolgt durch Polymerisation des Monomerengemischs in Gegenwart von Molekulargewichtsreglern MR, wie insbesondere von den dafür bekannten Mercaptanen, wie beispielsweise n-Butylmercaptan, n-Dodecylmercaptan, Thioglykolsäure, 2-Ethylhexylthioglycolat oder bevorzugt 2-Mercaptoethanol, wobei die Molekulargewichtsregler MR im allgemeinen in Mengen von 0,05 bis 5 Gew.-%, bezogen auf die eingesetzten Monomeren, bevorzugt in Mengen von 0,1 bis 2 Gew.-% und besonders bevorzugt in Mengen von 0,2 bis 1 Gew.-% eingesetzt werden (zu Molekulargewichtsregler MR vgl. auch H. Rauch-Puntigam, Th. Völker, "Acryl- und Methacrylverbindungen", loc.cit.; Houben-Weyl, Methoden der Organischen Chemie, Bd. XIV/1, Seite 66, Georg Thieme, Heidelberg, 1961 oder Kirk-Othmer, loc.cit., Vol. 1, Seiten 296ff). Die solchermaßen eingestellten mittleren Molekulargewichte M_{w} der Copolymerisate CP liegen im allgemeinen zwischen 10⁴ und 5 x 10⁵ Dalton, vorzugsweise zwischen 3 x 10⁴ und 2,5 x 10⁵ Dalton, entsprechend reduzierten Viskositäten η_{sp/c} (gemessen nach DIN 51562 in Chloroform) von 10 bis 150 ml/g, vorzugsweise von 15 bis 100 ml/g (bezogen auf Polymethylmethacrylat als Eichstandard: zur Bestimmung von M_{w} vgl. beispielsweise H.F. Mark et al., Encyclopedia of Chemical Science and Technology, Vol. 10, Seiten 1 bis 19, J. Wiley, New York, 1978).
Weiterhin können die zu polymerisierenden Monomermischungen aus (m1), (m2), (m3) und gegebenenfalls (m4) neben den Polymerisationsinitiatoren PI und den Molekulargewichtsreglern MR als weitere Additive UV-Absorber, Entformungshilfsmittel, Farbstoffe, Pigmente sowie vor allem die im folgenden beschriebenen erfindungsgemäßen organischen Phosphitverbindungen OP in den an sich üblichen Mengen enthalten, bzw., im Falle der Phosphitverbindungen OP, in Mengen zwischen 0,001 und 2 Gew.-% bezogen auf das gebildete Copolymerisat CP.
Die Herstellung der Copolymerisate CP erfolgt vorzugsweise per Substanzpolymerisation, besonders bevorzugt in geeigneten Polymerisationskammern geeigneter Bauart. Im allgemeinen werden die Polymerisationskammern während der Polymerisation im Wasserbad bei Temperaturen zwischen 20 und 100 Grad C und/oder im Luftstrom bei Temperaturen zwischen 20 und 150 Grad C temperiert um einen gleichmäßigen Radikalstrom aus dem Zerfall des Polymerisationsinitiators aufrechtzuerhalten. Nach Abschluß der Polymerisation wird das Copolymerisat CP als Block der Polymerisationskammer entnommen, gemahlen und einer entgasenden Extrusion mit anschließender Granulation unterworfen. Das resultierende Granulat aus Copolymerisat CP ist hochtransparent, farblos, insbesondere wenn die erfindungsgemäßen Phosphitverbindungen OP schon während der Polymerisation anwesend sind, und weisen Restmonomerengehalte von weniger als 2 Gew.-%, vorzugsweise weniger als 1 Gew.-% bezogen auf CP auf. Die Vicat-Erweichungstemperaturen VET nach DIN 53460 der Copolymerisate CP liegen im allgemeinen zwischen 100 und 160 Grad C, vorzugsweise zwischen 110 und 150 Grad C.

Die organischen Phosphitverbindungen OP sowie deren Einarbeitung

Wie schon zuvor beschrieben, können die erfindungsgemäßen organischen Phosphitverbindungen OP, die mindestens einen sterisch gehinderten Phenoxysubstituenten, der über das Sauerstoffatom kovalent mit dem Phosphoratom verbunden ist, aufweisen, schon vor oder während der Polymerisation der Monomerenmischung zugegeben werden.
In einer weiteren Ausführungsform der Erfindung werden die flüssigen oder pulverförmigen Phosphitverbindungen OP mit dem im allgemeinen als Granulat oder als Mahlgut vorliegenden Copolymerisat CP zunächst in langsam laufenden Mischaggregaten, wie beispielsweise Trommel-, Rhönrad- oder Doppelkammerpflugscharmischern vorgemischt. Die langsam laufenden Mischaggregate verursachen ein mechanisches Mischen, ohne daß in der Regel die Phasengrenzen aufgehoben werden (vgl. beispielsweise Ullmanns Enzyklopädie der technischen Chemie, 4. Auflage, Bd. 2, Seiten 282 bis 311, Verlag Chemie, Weinheim, New York, 1980). Solchermaßen hergestellte Formmassen FM aus Mischungen von CP und OP werden in einem zweiten Verarbeitungsschritt unter homogenem Mischen der o.g. Mischungskomponenten in der Schmelze thermoplastisch aufbereitet, wobei hierfür heizbare Mischaggregate bei den dafür geeigneten Temperaturen, in der Regel zwischen 150 und 350 Grad C verwendet werden. Beispielsweise sind solche heizbaren Mischaggregate Ein- oder Mehrschneckenextruder oder Extruder mit oszillierender Schnecke sowie gegebenenfalls zusätzlich mit Scherstiften. Mit diesem Verfahren können die Formmassen FM als Gleichkorngranulate mit Korngrößen von beispielsweise 2 bis 5 mm dargestellt werden.
In einer weiteren Ausführungsform der Erfindung werden Copolymerisat CP und organische Phosphitverbindung OP in einem geeigneten Lösungsmittel gelöst, beispielsweise mit Hilfe von Schüttelvorrichtungen oder in einer Kugelmühle. Das Lösungsmittel kann nach dem Mischungsprozeß direkt abgezogen werden oder die Mischung aus CP und OP kann mit geeigneten Fällungsmitteln aus der Lösung gefällt werden, um die Mischung zu isolieren. Die nach Abziehen des Lösungsmittels oder durch Fällung anfallenden pulverförmigen Mischungen aus CP und OP werden vorzugsweise, wie zuvor beschrieben, in Schmelzemischern homogenisiert und zu Gleichkorngranulat verarbeitet.

Die erfindungsgemäß verwendeten organischen Phosphitverbindungen OP sind Phosphitverbindungen, die mindestens einen sterisch gehinderten Phenoxysubstituenten aufweisen, der über das Sauerstoffatom mit dem Phosphoratom des Phosphits kovalent verbunden ist. Vorzugsweise werden als organische Phosphitverbindungen OP Verbindungen der Formel I oder der Formel II verwendet: 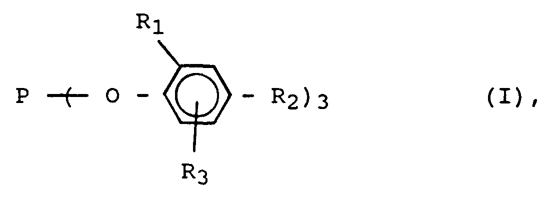
- wobei: R₁ und R₂ unabhängig voneinander für Alkylreste mit 1 bis 6 Kohlenstoffatomen, vorzugsweise für Methyl, Isopropyl und tert.-Butyl, sowie R₃ für Wasserstoff oder Alkylreste mit 1 bis 10 Kohlenstoffatomen
stehen können,
beziehungsweise: 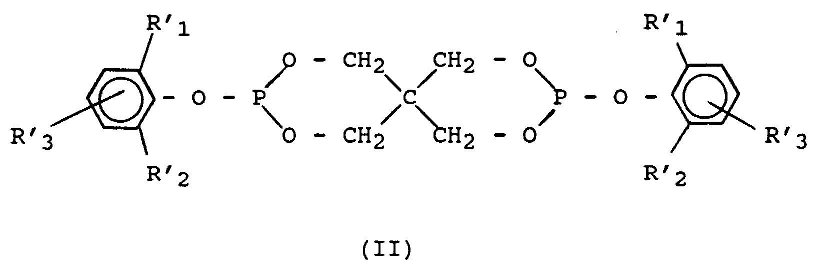 wobei
- R'₁: für Wasserstoff oder einen Alkylrest mit 1 bis 6 Kohlenstoffatomen, vorzugsweise für Methyl, Isopropyl und tert.-Butyl,
- R'₂: für einen Alkylrest mit 1 bis 6 Kohlenstoffatomen, sowie
- R'₃: für Wasserstoff oder Alkylreste mit 1 bis 10 Kohlenstoffatomen
stehen können.

Beispielhaft für organische Phosphitverbindungen OP der Formeln I und II seien genannt:
Tris(2,4-dimethylphenyl)phosphit, Tris(2,4-diisopropylphenyl)phosphit, Tris(2,4-diisopropyl-6-methylphenyl)phosphit, Tris(2,4,6-trimethylphenyl)phosphit, Bis(2,6-dimethylphenyl)pentaerythritoldiphosphit, Bis(2,4,6-trimethylphenyl)pentaerythritoldiphosphit, Bis(2,6-diisopropylphenyl)pentaerythritoldiphosphit, Bis(2,6-diisopropyl-4-methylphenyl)pentaerythritoldiphosphit, sowie bevorzugt Tris(2,4-di-tert.-butyl-6-methylphenyl)phosphit und Bis(2,6-di-tert.-butylphenyl)pentaerythritoldiphosphit sowie besonders bevorzugt Tris(2,4-di-tert.-butylphenyl)phosphit und Bis(2,6-di-tert.-butyl-4-methylphenyl)pentaerythritoldiphosphit.

Bezogen auf 100 Gew.-Teile Copolymerisat CP sind in den erfindungsgemäßen Formmassen FM 0,001 bis 2 Gew.-Teile, vorzugsweise 0,01 bis 1 Gew.-Teile und besonders bevorzugt 0,02 bis 0,5 Gew.-Teile der organischen Phosphitverbindung OP anwesend.

### Vorteilhafte Wirkungen der Erfindung

Die erfindungsgemäßen Formmassen FM, bestehend aus Mischungen aus Copolymerisat CP und organischer Phosphitverbindung OP, weisen eine, im Vergleich zu Formmassen bestehend aus Copolymerisat CP bzw. bestehend aus Copolymerisaten CP und von OP verschiedenen Stabilisatoren gegen thermischen Abbau, verbesserte Stabilität gegen eine Gelbverfärbung bei thermischer Belastung auf. Dies ist insbesondere im Hinblick auf die Herstellung komplexer Bauteile aus den Formmassen FM im Spritzgußverfahren von hoher Bedeutung, da hier bei langen Fließwegen und komplexen Spritzgußformen die Formmassen FM thermisch stark belastet werden. Die optischen Anforderungen an Bauteile aus Formmassen FM, bestehend aus Copolymerisaten CP sind in vielen Anwendungsbereichen sehr hoch, insbesondere bei Verglasungselementen im Automobilbereich, wie beispielsweise Streuscheiben für Scheinwerfer oder Rücklichtabdeckungen.

Die folgenden Beispiele sollen die Erfindung veranschaulichen.

### BEISPIELE

### Beispiel 1

### Herstellung des Copolymerisats CP1

Eine Monomermischung aus 3000 g Methylmethacrylat, 600 g Styrol und 400 g Maleinsäureanhydrid wird mit 1,68 g Dilauroylperoxid und 0,4 g tert.-Butylperisononanoat als Polymerisationsinitiator PI, 6,7 g 2-Mercaptoethanol als Molekulargewichtsregler MR, sowie 4 g 2-(2-Hydroxy-5-methylphenyl)-benztriazol als UV-Absorber und 4 g Palmitinsäure als Entformungshilfsmittel versetzt.
Das resultierende Gemisch wird in eine Polymerisationskammer gefüllt und 10 Minuten entgast. Danach wird im Wasserbad 6 Stunden bei 60 Grad C und 25 Stunden bei 50 Grad C Wasserbadtemperatur polymerisiert. Nach etwa 25 Stunden erreicht das Polymerisationsgemisch mit 144 Grad C seine Maximaltemperatur. Nach Entfernung der Polymerisationskammer wird das Polymerisat noch 12 Stunden bei 120 Grad C im Luftschrank getempert.
Das resultierende Copolymerisat CP1 ist klar und weist einen Gelbwert nach DIN 6167 (D65/10°) von 1,4 an einer 8 mm dicken Preßplatte und eine Lichttransmission T_{D65} nach DIN 5033/5036 von 90,9 % auf. Die Vicat-Erweichungstemperatur VET von CP1 beträgt nach DIN 53460 121 Grad C, die reduzierte Viskosität η_{sp/c} 65 ml/g entsprechend einem mittleren Molekulargewicht M_{w} von etwa 130.000 Dalton (bezogen auf einen Polymethylmeth-acrylat-Standard).

### Beispiel 2

### Einarbeitung der organischen Phosphitverbindung OP1 in das Copolymerisat CP1

10 kg Mahlgut des Copolymerisats CP1 werden mit 10 g Bis(2,6-di-tert.-butyl-4-methylphenyl)pentaerythritoldiphosphit OP1 10 Minuten auf einem Taumelmischer vermischt. Die resultierende Mischung aus CP1 und OP1 wird auf einem Einschneckenextruder bei Temperaturen zwischen 230 Grad C (Einzugszone) und 255 Grad C unter Vakuumentgasung (p = 30 - 40 mbar) schmelzegemischt und anschließend granuliert. Es resultiert die Formmasse FM1.

### Beispiel 3

### Einarbeitung der organischen Phosphitverbindung OP2 in das Copolymerisat CP1

Es werden 10 g Tris(2,4-di-tert.-butylphenyl)phosphit OP2 in 10 kg Mahlgut des Copolymerisats CP1 analog Beispiel 2 eingearbeitet. Es resultiert die Formmasse FM2.

### Beispiel 4 (Vergleichsbeispiel)

Einarbeitung einer organischen Phosphitverbindung, die nicht den erfindungsgemäßen Verbindungen OP angehört.

Es werden 10 g Phenyldidecylphosphit OP' in 10 kg Mahlgut des Copolymerisats CP1 analog Beispiel 2 eingearbeitet. Es resultiert die Formmasse FM'3.

### Beispiel 5 (Vergleichsbeispiel)

### Copolymerisat CP1 ohne Stabilisator

10 kg Mahlgut des Copolymerisats CP1 werden gemäß Beispiel 2 auf dem Einschneckenextruder schmelzgemischt und anschließend granuliert. Es resultiert die Formmasse FM'4.

### Beispiele 6 bis 9:

### Verarbeitung der Formmassen gemäß den Beispielen 2 bis 5 im Spritzguß

Auf einer Arbug-Spritzgießmaschine werden bei Schmelzetemperaturen von 285 Grad C 3 mm dicke Prüfplättchen hergestellt, an denen der Gelbwert der Formmassen gemäß den Beispielen 2 bis 5 bestimmt wird. Dieser Gelbwert wird durch Differenzbildung mit dem Gelbwert des nach Beispiel 1 hergestellten Copolymerisats CP1 verglichen:

| Beisp. | Formmasse | Gelbwert G2 nach nach Verarbeitung im Spritzguß | ΔG = Gelbwert G2 - Gelbwert G1 von CP1 nach der Polymerisation |
|---|---|---|---|
| 6 | FM 1 | 1,4 | ± 0 |
| 7 | FM 2 | 1,3 | - 0,1 |
| 8 | FM'3 | 1,6 | + 0,2 |
| 9 | FM'4 | 1,6 | + 0,2 |

## Patentansprüche

1. Polymethacrylat-Formmasse FM, bestehend aus einem Copolymerisat CP, aufgebaut aus:
(m1) 50 - 98 Gew.-% Alkylmethacrylat mit 1 bis 6 Kohlenstoffatomen im Esterrest,
(m2) 1 - 25 Gew.-% Vinylaromat,
(m3) 1 - 25 Gew.-% Maleinsäureanhydrid, sowie gegebenenfalls
(m4) 0 - 5 Gew.-% Alkylacrylat mit 1 bis 6 Kohlenstoffatomen im Esterrest
wobei die Summe aus (m1), (m2), (m3) und gegebenenfalls (m4) 100 Gew.-% ausmacht und gegebenenfalls als weitere Additive wie UV-Absorber, Enformungshilfsmittel, Farbstoffe und/oder Pigmente in an sich üblichen enthalten sein können, enthaltend, bezogen auf 100 Gew.-Teile CP, 0,001 bis 2 Gew.-Teile einer organischen Phosphitverbindung OP als Stabilisierungsmittel gegen thermischen Abbau,
dadurch gekennzeichnet,
daß die organische Phosphitverbindung OP mindestens einen sterisch gehinderten Phenoxysubstituenten aufweist, der über das Sauerstoffatom kovalent mit dem Phosphoratom verbunden ist.

2. Polymethacrylat-Formmasse FM gemäß Anspruch 1,
dadurch gekennzeichnet, daß die organische Phosphitverbindung OP eine Verbindung der Formel I ist: 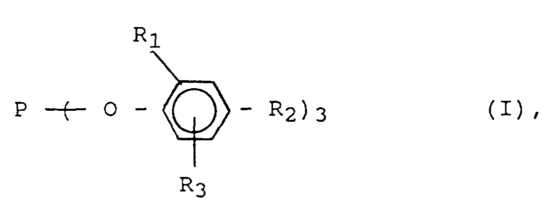
worin R₁ und R₂ unabhängig voneinander für Alkylreste mit 1 bis 6 Kohlenstoffatomen, sowie
R₃ für Wasserstoff oder für einen Alkylrest mit 1 bis 10 Kohlenstoffatomen
stehen können.

3. Polymethacrylat-Formmasse FM gemäß Anspruch 1,
dadurch gekennzeichnet, daß die organische Phosphitverbindung OP eine Verbindung der Formel II ist. 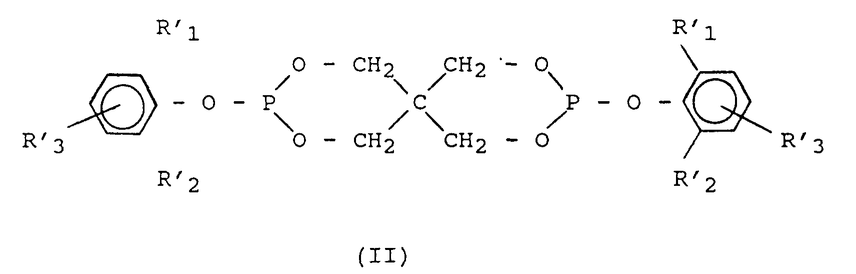 worin
R'₁ für Wasserstoff oder einen Alkylrest mit 1 bis 6 Kohlenstoffatomen,
R'₂ für einen Alkylrest mit 1 bis 6 Kohlenstoffatomen sowie
R'₃ für Wasserstoff oder einen Alkylrest mit 1 bis 10 Kohlenstoffatomen
stehen können.

4. Polymethacrylat-Formmasse FM gemäß den Ansprüchen 1 bis 3, dadurch gekennzeichnet, daß das Monomere (ml) Methylmethacrylat ist.

5. Polymethacrylat-Formmasse FM gemäß den Ansprüchen 1 bis 4, dadurch gekennzeichnet, daß das Monomere (m2) Styrol und/oder α-Methylstyrol ist.

6. Polymethacrylat-Formmasse FM gemäß den Ansprüchen 2, 4 und 5, dadurch gekennzeichnet, daß die Alkylreste R₁ und R₂ der organischen Phosphitverbindung OP der Formel I tert.-Butyl sind.

7. Polymethacrylat-Formmasse FM gemäß den Ansprüchen 3 bis 5, dadurch gekennzeichnet, daß die Alkylreste R'₁ und R'₂ der organischen Phosphitverbindung OP der Formel II tert.-Butyl sind, sowie R'₃ Methyl ist.

8. Verwendung der Polymethacrylat-Formmasse FM gemäß den Ansprüchen 1 bis 7 zur Herstellung von Verglasungselementen im Automobilbereich, wie Streuscheiben für Scheinwerfer oder Rücklichtabdeckungen.

## Claims

1. Polymethacrylate moulding composition FM consisting of a copolymer CP synthesised from:
(m1) 50 to 98% by weight
of alkylmethacrylate having 1 to 6 carbon atoms in the ester group,
(m2) 1 to 25% by weight
of aromatic vinyl,
(m3) 1 to 25% by weight
of maleic acid anhydride,
and optionally
(m4) 0 to 5% by weightof alkylacrylate having 1 to 6 carbon atoms in the ester group,
wherein the sum of (m1), (m2), (m3) and optionally (m4) adds up to 100% by weight, and UV absorbers, mould release agents, dyes and/or pigments may optionally be present as further additives, containing 0.001 to 2 parts by weight, based on 100 parts by weight of CP, of an organic phosphite compound OP as a stabiliser against thermal decomposition, characterised in that the organic phosphite compound OP has at least one sterically hindered phenoxy substituent which is covalently bound to the phosphorus atom via the oxygen atom.

2. Polymethacrylate moulding composition FM according to claim 1, characterised in that the organic phosphite compound OP is a compound of formula I: 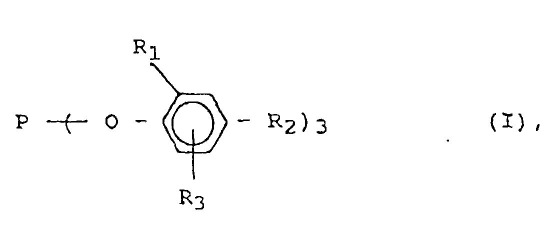
wherein R₁ and R₂ independently of one each other may denote alkyl groups having 1 to 6 carbon atoms, and
R₃ may denote hydrogen or an alkyl group having 1 to 10 carbon atoms.

3. Polymethacrylate moulding composition FM according to claim 1, characterised in that the organic phosphite compound OP is a compound of formula II 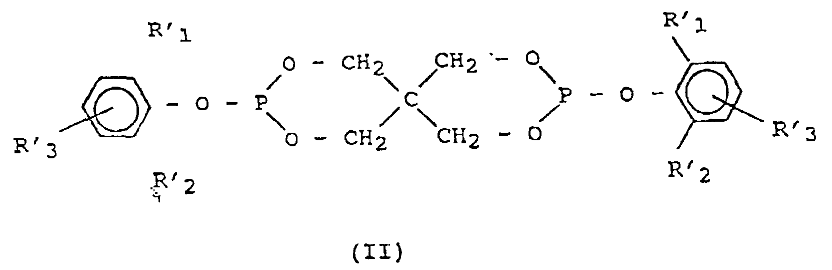
wherein R'₁ may denote hydrogen or an alkyl group having 1 to 6 carbon atoms,
R'₂ may denote an alkyl group having 1 to 6 carbon atoms and
R'₃ may denote hydrogen or an alkyl group having 1 to 10 carbon atoms.

4. Polymethacrylate moulding composition FM according to claims 1 to 3, characterised in that the monomer (m1) is methylmethacrylate.

5. Polymethacrylate moulding composition FM according to claims 1 to 4, characterised in that the monomer (m2) is styrene and/or α-methylstyrene.

6. Polymethacrylate moulding composition FM according to claims 2, 4 and 5, characterised in that the alkyl groups R₁ and R₂ of the organic phosphite compound OP of formula I are tert.-butyl.

7. Polymethacrylate moulding composition FM according to claims 3 to 5, characterised in that the alkyl groups R'₁ and R'₂ of the organic phosphite compound OP of formula II are tert.-butyl and R'₃ is methyl.

8. Use of the polymethacrylate moulding composition FM according to claims 1 to 7 for the manufacture of glazing elements for the automobile industry such as diffusion covers for headlamps or rear light covers.

## Revendications

1. Matière à mouler FM à base de polyméthacrylate, consistant en un copolymère CP constitué de :
(m1) 50-98 % en poids d'un méthacrylate d'alkyle ayant de 1 à 6 atomes de carbone dans le fragment ester,
(m2) 1-25 % en poids d'un composé vinylaromatique,
(m3) 1-25 % en poids d'anhydride maléique,
ainsi qu'éventuellement
(m4) 0-5 % en poids d'un acrylate d'alkyle ayant de 1 à 6 atomes de carbone dans le fragment ester,
la somme de (m1), (m2), (m3) et éventuellement (m4) représentant 100 % en poids, et éventuellement, en tant qu'autres additifs, des absorbeurs UV, des auxiliaires de démoulage, des colorants et/ou des pigments peuvent être contenus, contenant en tant que stabilisant vis-à-vis de la dégradation thermique, par rapport à 100 parties en poids de CP, 0,001 à 2 parties en poids d'un composé de type phosphite organique PO,
caractérisée en ce que
le composé de type phosphite organique PO comporte au moins un substituant phénoxy à empêchement stérique, qui est relié par covalence, par l'atome d'oxygène, à l'atome de phosphore.

2. Matière à mouler FM à base de polyméthacrylate selon la revendication 1,
caractérisée en ce que
le composé de type phosphite organique PO est un composé de formule I : 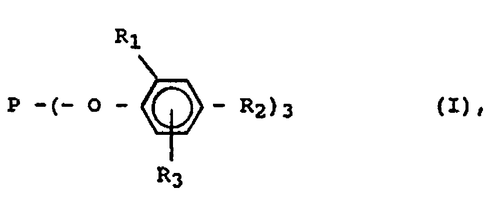 dans laquelle R₁ et R₂ peuvent représenter, indépendamment l'un de l'autre, des radicaux alkyle ayant de 1 à 6 atomes de carbone, et R₃ représente un atome d'hydrogène ou un groupe alkyle ayant de 1 à 10 atomes de carbone,

3. Matière à mouler FM à base de polyméthacrylate selon la revendication 1,
caractérisée en ce que
le composé de type phosphite organique PO est un composé de formule II : 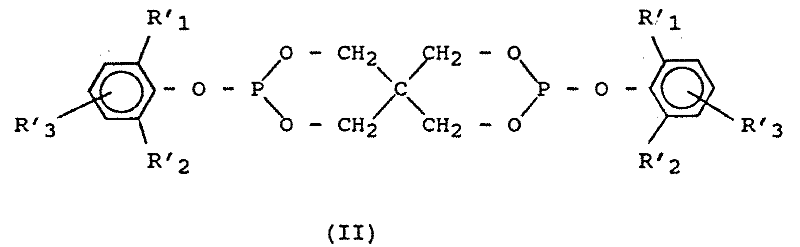 dans laquelle :
R'₁ peut représenter un atome d'hydrogène ou un radical alkyle ayant de 1 à 6 atomes de carbone,
R'₂ peut représenter un radical alkyle ayant de 1 à 6 atomes de carbone, et
R'₃ peut représenter un atome d'hydrogène ou un groupe alkyle ayant de 1 à 10 atomes de carbone.

4. Matière à mouler FM à base de polyméthacrylate selon les revendications 1 à 3,
caractérisée en ce que
le monomère (m1) est le méthacrylate de méthyle.

5. Matière à mouler FM à base de polyméthacrylate selon les revendications 1 à 4,
caractérisée en ce que
le monomère (m2) est le styrène et/ou l'α-méthylstyrène.

6. Matière à mouler FM à base de polyméthacrylate selon les revendications 2, 4 et 5,
caractérisée en ce que
les radicaux alkyle R₁ et R₂ du composé de type phosphite organique PO de formule I représentent le groupe tert-butyle.

7. Matière à mouler FM à base de polyméthacrylate selon les revendications 3 à 5,
caractérisée en ce que
les radicaux alkyle R'₁ et R'₂ du composé de type phosphite organique PO de formule II représentent le groupe tert-butyle et R'₃ est le groupe méthyle.

8. Utilisation de la matière à mouler FM à base de polyméthacrylate selon les revendications 1 à 7,
pour la fabrication d'éléments de type verre dans le secteur de l'automobile, tels que des lentilles frontales de phares ou des cabochons de feux arrière.
